**Europäisches Patentamt**

**European Patent Office**

**Office européen des brevets**

(19)

(11) **EP 0 922 685 A1**

(12) **EUROPEAN PATENT APPLICATION**

(43) Date of publication:
**16.06.1999 Bulletin 1999/24**

(51) Int. Cl.$^6$: **C05D 5/00**, C01F 5/40, C05D 3/02

(21) Application number: **97500227.0**

(22) Date of filing: **29.12.1997**

(84) Designated Contracting States:
**AT BE CH DE DK ES FI FR GB GR IE IT LI LU MC NL PT SE**
Designated Extension States:
**AL LT LV MK RO SI**

(30) Priority: **10.12.1997 ES 9702560**

(71) Applicant: **Agrimartin, S.A.**
**44460 La Escaleruela-Sarrion Teruel (ES)**

(72) Inventor: **Blesa, Generoso Martin**
**44460 La Escaleruela-Sarrion Teruel (ES)**

(74) Representative:
**Perez Bonal, Bernardo**
**Explanada 8**
**28040 Madrid (ES)**

(54) **Magnesium and sulphur mineral fertilizer and a procedure for its preparation**

(57) The mineral fertilizer, based on magnesium sulphate, comprises 16-30% of total MgO, 12-30% of MgO soluble in water and 30-50% of sulphur (%$SO_3$) and preferably, it is found in granulated form. The fertilizer may be obtained by solubilizing with sulphuric acid, a mixture which contains magnesium formed by products coming from the extraction and processing of magnesite, such as cyclone powder, magnesium hydroxide and magnesium calcium carbonate. The fertilizer is capable of supplying magnesium to soils, crops and fields which require the same.

EP 0 922 685 A1

**Description**

SCOPE OF THE INVENTION

The present invention is related to the use and evaluation of some subproducts and residues originated during the extraction and processing of magnesite. Particularly, the invention refers to a magnesium and sulphur mineral fertilizer obtained by solubilization with sulphuric acid of a mixture which contains said subproducts and residues, as well as to a procedure for the obtention of said fertilizer and to its agricultural applications. In a preferred embodiment, the magnesium and sulphur mineral fertilzier is to be found in granulated form.

BACKGROUND OF THE INVENTION

Magnesite is a mineral the main component of which is magnesium, and it is mainly found in the form of carbonates. Magnesite is used, calcinated in the production of refractary materials. During the calcination, grinding and purification of the mineral, a fine powder is created which is collected in cyclones and separated from the process. This powder deposits in slag heaps, and its principal use is the supply of magnesium in fertilizers, though its insolubility does not confer the most appropriate characteristics. Due to this, the production of cyclone powder is much greater than its output as raw material for fertilizers, so that it accumulates in the slag heaps causing problems of visual impact and powder in the environment. In order to prevent the air from dispersing this powder, a treatment is conducted which consists of an aspersion spraying of the cyclone powder heaps, which wets them little by little, thus originating the magnesium hydroxide or hydrated magnesite.

The magnesium calcium carbonate is a subproduct originated during the extraction in magnesite mines without specific practical use, which is normally deposited in slag heaps.

On the other hand, the magnesium is a secondary element, which is very important in the greater part of the vital phenomena of the plants. Chlorophyll is rich in magnesium, and acts as catalyst of the photosynthesis of carbohydrates parting from carbon dioxide and water, due to which a magnesium deficiency causes a reduction of the photosynthetic activity of green plants, producing in this way, a bad development of the green parts of the plants. Additionally, the magnesium participates in the formation and accumulation of the reserves of sugars, carbohydrates, proteins, vitamines, etc.

In recent years, the intensification of Agriculture has provoked a great interest for the application of magnesium fertilizers, since not only are greater exportations of the soil produced by the cultivations but also the magnesium deficiency in forage fields may also produce tetany (illness produced by magnesium deficiency in the blood or hipermagnegemia) in milking cows of great production.

The supply of magnesium is specially indicated in light and acid soils with scarce absorbent complex, capable of retaining the $Mg^{2+}$ in cultivated soils in intensive manner during long periods of time, in crops sensitive to lacks of magnesium or great consumers of the same, for example, fruit trees, citrics, vegetables, vineyards, and corn, and in fields which are intensively exploited, specially, those dedicated to forage for animal feeding.

Consequently, it is necessary to have fertilizers which supply magnesium in a manner which is capable of being assimilated by the plants.

Now, it has surprisingly been found that it is possible to obtain a magnesium mineral fertilizer parting from a mixture formed by subproducts and residues originated during the extraction and processing of magnesite, with which a double objective is achieved, on one hand, the elimination of an environmental problem associated both to the powder formed during the processing of the magnesite and to a subproduct originated in the extraction in magnesite mines, and on the other hand, to obtain an evaluation of said residues and subproducts by means of developing a mineral ferilizer capable of supplying magnesium to the soil, to crops and to fields which so require it.

In consequence, an objective to this invention is constituted by a magnesium and sulphur mineral fertilizer, suitable for agricultural applications, specially as supplier of magnesium for soils, cultivations and fields which so require it.

The procedure for the obtention of said ferilizer and its agricultural applications constitute additional objects of the present invention.

DETAILED DESCRIPTION OF THE INVENTION

This invention provides a magnesium and sulphur mineral fertilizer, hereonwards, mineral ferilizer of the invention, based on magnesium sulphate, which comprises:

|  | Weight percentage |
|---|---|
| MgO total | 16-30 |
| MgO soluble in water | 12-30 |
| Sulphur ($\%SO_3$) | 30-50 |

In a preferred embodiment, the mineral fertilizer of the invention is found in granulated form.

The mineral fertilizer of the invention is generally obtained by solubilization with sulphuric acid of a mixture which contains magnesium, formed by subproducts and residues which contain magnesium coming from the extraction and processing of the magnesite, followed by, if desired, the granulation of the previously obtained material with the object of obtaining the mineral fertilizer of the invention in granulated form.

Among the subproducts and residues which contain magnesium, which comes from the extraction and processing of the magnesite, can be found the cyclone powder produced by the calcination, grinding and purification of the magnesite, hereonwards cyclone powder, the magnesium hydroxide and the magnesium calcium carbonate.

The cyclone powder, obtained during the processing of the magnesite, presents the following characteristics:

| MgO | 72-74% weight |
|---|---|
| pH | 8-10 |
| Humidity | <2% weight |
| Fe and Al silicates | 4-6% weight |

The magnesium hydroxide, obtained for example, by wetting the cyclone powder with water, presents the following characteristics:

| MgO | 30-45% weight |
|---|---|
| pH | 7-9 |
| Humidity | 5-25% weight |

The magnesium calcium carbonate extracted from the magnesite mines comprises a mixture of calcium carbonate and of magnesic carbonate which presents the following characteristics:

| MgO | 25-35% weight |
|---|---|
| pH | 8-10 |
| Humidity | 2-8% weight |

More specifically, the elaboration of the mineral fertilizer of the invention starts with the obtention of a mixture which contains magnesium, preferrably with a content in MgO comprises between 30 and 70 weight, formed by cyclone powder, magnesium hydroxide and magnesium calcium carbonate, by means of mixing such components in the appropriate quantities to obtain said mixture with the previously indicated MgO content. The deliberated relation between the different components of the mixture may vary within very wide intervals since, in fact, the only limitation lies in that the resultant mixture has a MgO content comprised between 30 and 705% in weight.

The mixture which contains magnesium is measured out for example, by means of a hopper, to an appropriate reactor, such as a reactor in the form of barrel drum and provided with agitation means, where sulphuric acid is simultaneously added with a concentration comprised between 60 and 96%, to produce magnesium sulphate according to the following chemical reaction:

$$MgO + H_2SO_4 + nH_2 O \rightarrow MgSO_4{}^*nH_2O + H_2O$$

The measured out quantities of both products are:

- 40-60% weight of the mixture which contains magnesium and 30-70% weight of MgO; and
- 60-40% weight of sulphuric acid of 60-90%.

The resultant product of the previous reaction constitutes one of the mineral ferilizers of the invention and comprises:

|  | Weight Percentage |
|---|---|
| Total MgO | 16-30 |
| MgO soluble in water | 12-30 |
| Sulphur (%$SO_3$) | 30-50 |

Said product is found in the form of small rocks (at least 90% weight of the product is to be found in the form of rocks which present a diameter comprised between 1 and 600 mm).

If it is desired that the mineral fertilizer of the invention be in granulated form, the magnesium sulphate, previously obtained in the form of rocks is subjected to a grinding process in a suitable milling grinder, for example, in a hammer mill, to obtain a magnesium sulphate in the form of powder, in which, at least 90% weight has a grain size below 1 mm.

The obtained magnesium sulphate in the form of the powder is measured out by means of a hopper in a grinder where it is mixed with sulphuric acid and water in the following proportions:

|  | Weight Percentage |
|---|---|
| Magnesium sulphate (Powder) | 80-95 |
| Sulphuric acid (60-96%) | 2-10 |
| Water | 5-10 |

with which magnesium sulphate grains are formed which are dried in a dryer, for example, a drum dryer, where a hot air current is introduced which removes the excess humidity of the product. Next, the obtained product is sieved, for example, in a double pitch sieve, where the particles with a diameter over 4,5 mm and below 2 mm are separated, and recycled by introducing them in the grinder feeding input.

The sieved product enters a fluid bed cooler where it cools at a temperature comprised between 15 and 35°C, preferably at 25°C approximately, and taken to a conditioner where anti-thickeners are added, such as kaolin, fuel, amines, and the like, in a quantity comprised between 4 and 10 per thousand in weight. The resultant granulated magnesium sulphate (mineral fertilizer of the invention in granulated form) is transported towards the final storage silo for shipment or packaging. The obtained mineral ferilizer of the invention in granulated form comprises:

| Total MgO | 16-30% |
|---|---|
| MgO soluble in water | 12-30% |
| Sulphur (%$SO_3$) | 30-50% |

The mineral ferilizer of the invention is capable of supplying magnesium to the soil, crops and fields which require the same, so that it is appropriate as a supplier of magnesium specially in the following cases:

- in light and acid soils with scarce absorbent complex, capable of retaining the $Mg^{2+}$;
- in soils which have been intensely cultivated during a long time;
- in crops which a sensitive to lack of magnesium or to great consumers of the same: fruit trees, citric fruits, vegetables, vineyards and corn; and
- in fields which have been intensely exploited, specially the ones dedicated to forage for animal feeding.

The mineral fertilizer of the invention may be used in Agriculture as a supply of magnesium to the soil, crops and fields which require the same, in a wide measuring out interval. The measuring out indicated as follows may be considered as representative:

- Cereals not requiring irrigation: 300-600 kg/Ha
- Cereals requiring irrigation: 400-800 kg/Ha

    - Beetroot: 400 - 800 kg/Ha
    - Horticultural crops: 600 - 1.000 kg/Ha

By means of the mineral fertilizer of the invention the magnesite (with a high insoluble magnesium content) may be transformed into water soluble magnesium sulphate, and totally capable of being assimilated by the plants and crops, by the action of the sulphuric acid. Additionally, the subsequent granulation of the magnesium sulphate obtained in order to achieve the mineral fertilizer of the invention in granulated form, supposes an added value since it simplifies its application in the fields by means of using traditional fertilizing machines and the mixture with other granulated fertilizer for the obtention of mixtures NPK with magnesium.

The following example shall serve to illustrate a specific form of embodiment of the invention, though without being considered as limitative to the scope of the same. The analytical methods used to conduct the analysis are the Official Methods of the Ministry of Agriculture, Food and Fishing.

EXAMPLE 1

Preparation of a magnesium and sulphur mineral ferilizer

By means of a hopper with an incorporated weighing system, 45% weight of a mixture containing magnesium is measured out and, by means of a flow meter, 55% weight of sulphuric acid of 70%.

The mixture containing magnesium presents a 52% weight of MgO and a 10% weight of humidity, and has been obtained by means of mixing, in appropriate quantities, cyclone powder, magnesium hydroxide and magnesium calcium carbonate, the characteristics of which have been indicated previously in the description.

The 70% sulphuric acid contains 57% weight of sulphur ($SO_3$).

The respective quantities of the two products are intimately mixed in the interior of a drum barrel provided with blades, by the action of said blades and of the actual rotation of the drum. When extracted from the drum barrel, the product falls into a transporter belt of the Cullman type, 15 m in length, which circulates slowly so that the magnesium sulphate finishes forming at the end of the same. Said product is found in the form of small rocks (90% weight of said rocks has a size comprised between 1 and 600 mm) and their composition comprise:

|  | Weight Percentage |
|---|---|
| Total MgO | 24 |
| MgO soluble in water | 22 |
| Sulphur (%$SO_3$) | 33 |

The obtained magnesium sulphate rocks are introduced, by means of a loader shovel in a hammer mill to obtain a magnesium sulphate in the form of powder, from which, at least 90% presents a grain size below 1 mm.

The obtained magnesium sulphate in powder, is measured out by means of a hopper with an incorporated weighing system, and introduced inside a grinder drum where it is mixed with sulphuric acid and water in the following proportions:

| Magnesium sulphate (Powder) | 90% |
|---|---|
| Sulphuric acid (70%) | 7% |
| Water | 3% |

thus forming magnesium sulphate grains which are dried in a drum dryer by the action of a hot air current and which is introduced in order to remove excess humidity from the product. Next, the obtained grains are sieved in a double pitch sieve where the particles with a diameter over 4,5 mm and below 2 mm are separated and introduced once again in the feeding input of the grinder.

The sieved product enters into a fluid bed cooler where it cools up to 35°C approximately, and taken to the conditioner where kaolin (anti-thickener) is added to it. The obtained granulated magnesium sulphate falls into an elevator where it is transported to the final storage silo ready for shipment or packaging.

The composition of the granulated magnesium sulphate (mineral fertilizer of the invention in granulated form) comprises:

| | Weight Percentage |
|---|---|
| Total MgO | 23% |
| MgO soluble in water | 22% |
| Sulphur (%$SO_3$) | 35% |

## Claims

1.  Procedure for the preparation of a magnesium and sulphur mineral fertilizer, based on magnesium sulphate, which contains:

| | Weight Percentage |
|---|---|
| Total MgO | 16-30 |
| MgO soluble in water | 12-30 |
| Sulphur (%$SO_3$) | 30-50 |

which comprises the solubilization with sulphuric acid of a mixture containing magnesium formed by subproducts and residues which contain magnesium coming from the extraction and processing of magnesite.

2.  Procedure according to claim 1, in which said subproducts and residues which contain magnesium, coming from the extraction and processing of the magnesite are cyclone powders coming from the calcination, grinding and purification of the magnesite, magnesium hydroxide and magnesium calcium carbonate.

3.  Procedure according to claim 2, in which said cyclone powder presents the following characteristics:

| MgO | 72-74% weight |
|---|---|
| pH | 8-10 |

(continued)

| Humidity | <2% weight |
|---|---|
| Fe and Al silicates | 4-6% weight |

4. Procedure according to claim 2, in which said magnesium hydroxide presents the following characteristics:

| MgO | 30-45% weight |
|---|---|
| pH | 7-9 |
| Humidity | 5-25% weight |

5. Procedure according to claim 2, in which said magnesium calcium carbonate presents the following characteristics:

| MgO | 25-35% weight |
|---|---|
| pH | 8-10 |
| Humidity | 2-8% weight |

6. Procedure according to claim 1, in which said mixture containing magnesium has a MgO content comprised between 30 and 70% in weight.

7. Procedure according to claim 6, which comprises the reacting of the following:

- 40-60% weight of the mixture which contains 30-70% weight of MgO; and
- 60-40% weight of suphuric acid of 60-90%

8. Procedure according to claim 1, which additionally comprises subjecting the resultant material of the solubilization with sulphuric acid of the mixture which contains magnesium to a granulation process to obtain the mineral fertilizer in granulated form.

9. Procedure according to claim 8, which comprises grinding the resultant material of the solubilization with sulphuric acid of the mixture which contains magnesium to obtain a magnesium sulphate in the form of powder, in which, at least 90% has a grain size below 1 mm.

10. Procedure according to claim 9, which additionally comprises the mixing in a grinder, of the magnesium sulphate in the form of powder with sulphuric acid and water in the following proportions:

| | Weight percentage |
|---|---|
| Magnesium sulphate (powder) | 80-95 |
| Sulphuric acid (60-96%) | 2-10 |
| Water | 5-10 |

11. Procedure according to claims 9 and 10, which additionally comprises the stages of:

- drying the obtained magnesium sulphate grains
- separating, by means of sieving, the particles with a diameter over 4,5 mm and below 2 mm which are reintroduced in the grinder,

- cooling the sieved product at a temperature comprised between 15 and 30°C, and
- adding an anti-thickener.

**12.** Procedure according to claim 11, in which said anti-thickener is selected from the group formed by kaolin, fuel, amines, and their mixtures.

**13.** A magnesium and sulphur mineral fertilizer, based on magnesium sulphate, which contains:

|  | Weight percentage |
| --- | --- |
| MgO | 16-30 |
| Mgo soluble in water | 12-30 |
| Sulphur ($\%SO_3$) | 30-50 |

**European Patent Office**

**EUROPEAN SEARCH REPORT**

Application Number

EP 97 50 0227

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | CHEMICAL ABSTRACTS, vol. 106, no. 20, 18 May 1987 Columbus, Ohio, US; abstract no. 158774x, S. PRAKASH ET AL.: "Commercial production of magnesium chemicals from industrial waste dust and fines" page 141; XP002097348 | 1,2,6 | C05D5/00 C01F5/40 C05D3/02 |
| Y | * abstract * & CEW, CHEM. ENG. WORLD , vol. 22, no. 1, 1987, pages 39-41, | 13 | |
| X | CHEMICAL ABSTRACTS, vol. 65, no. 1, 4 July 1966 Columbus, Ohio, US; abstract no. 360d, J. SEMECKY ET AL.: "Manufacturing technical magnesium chloride or sulfate or their mixtures" page 0000; XP002097347 | 1-3,6 | |
| Y | * abstract * & CZ 115 819 A (J. SEMECKY ET AL.) | 13 | TECHNICAL FIELDS SEARCHED (Int.Cl.6) C05D C01F |
| X | CHEMICAL ABSTRACTS, vol. 90, no. 13, 26 March 1979 Columbus, Ohio, US; abstract no. 102643n, M. DANKIEWICZ ET AL.: "Fertilizer containing magnesium in a form soluble in water" page 492; XP002097344 | 1,6,8,13 | |
| Y | * abstract * & PL 97 839 A (INSTYTUT NAWOZOW SZTUCZNYCH) | 13 | |

-/--

The present search report has been drawn up for all claims

| Place of search | Date of completion of the search | Examiner |
|---|---|---|
| THE HAGUE | 22 March 1999 | Schut, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**European Patent Office**

**EUROPEAN SEARCH REPORT**

Application Number

EP 97 50 0227

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | CHEMICAL ABSTRACTS, vol. 112, no. 21, 21 May 1990 Columbus, Ohio, US; abstract no. 197128h, B. ZAWADZKI ET AL.: "Fluidized bed dry conversion of magnesite to magnesium sulfate fertilizer" page 602; XP000181515 | 1,13 | |
| Y | * abstract * & PL 139 519 A (POZNANSKIE ZAKLADY CHEMICZNE) | 13 | |
| X | CHEMICAL ABSTRACTS, vol. 116, no. 1, 6 January 1992 Columbus, Ohio, US; abstract no. 5833x, T. SAITO: "Manufacture of granular magnesium sulfate fertilizer" page 585; XP000253248 * abstract * & JP 03 164487 A (DIA CHEMICAL K.K.) | 1,6,8,13 | |
| A | CHEMICAL ABSTRACTS, vol. 75, no. 19, 8 November 1971 Columbus, Ohio, US; abstract no. 117594m, S. IZAWA ET AL.: "Dust-resistent calcium fertizers" page 162; XP002097345 * abstract * & JP 07 100250 A (JAPAN CARBIDE INDUSTRIES CO., INC.) | 12 | **TECHNICAL FIELDS SEARCHED (Int.Cl.6)** |

-/--

The present search report has been drawn up for all claims

| Place of search | Date of completion of the search | Examiner |
|---|---|---|
| THE HAGUE | 22 March 1999 | Schut, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**EP 0 922 685 A1**

**European Patent Office**

**EUROPEAN SEARCH REPORT**

Application Number

EP 97 50 0227

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | FR 2 723 085 A (MEAC SA SOCIETE ANONYME) 2 February 1996 * claims * | 12 | |
| A | US 2 258 709 A (W.H. MACINTIRE) 14 October 1941 * page 1, left-hand column, line 1 - page R, line 30 * | 1,13 | |
| X | CHEMICAL ABSTRACTS, vol. 81, no. 2, 15 July 1974 Columbus, Ohio, US; abstract no. 5161k, I. FLOREA: "Magnesium sulfate from calcined dolomite" page 69; XP002097346 | 13 | |
| A | * abstract * & RO 56 021 A (UZINA METALURGICA DE METALE NEFEROASE) | 1 | |

TECHNICAL FIELDS SEARCHED (Int.Cl.6)

The present search report has been drawn up for all claims

| Place of search | Date of completion of the search | Examiner |
|---|---|---|
| THE HAGUE | 22 March 1999 | Schut, R |

EPO FORM 1503 03.82 (P04C01)

## ANNEX TO THE EUROPEAN SEARCH REPORT
## ON EUROPEAN PATENT APPLICATION NO.

EP 97 50 0227

This annex lists the patent family members relating to the patent documents cited in the above-mentioned European search report.
The members are as contained in the European Patent Office EDP file on
The European Patent Office is in no way liable for these particulars which are merely given for the purpose of information.

22-03-1999

| Patent document cited in search report | | Publication date | Patent family member(s) | Publication date |
|---|---|---|---|---|
| FR 2723085 | A | 02-02-1996 | NONE | |
| US 2258709 | A | 14-10-1941 | NONE | |

EPO FORM P0459

For more details about this annex : see Official Journal of the European Patent Office, No. 12/82